# EUROPEAN PATENT APPLICATION

(11) **EP 4 579 425 A1**
(43) Date of publication of application: **02.07.2025**
(21) Application number: 23867235.6
(22) Date of filing: 29.08.2023
(51) Int. Cl.: G06F 3/06

(54) **KEY VALUE STORAGE METHOD AND SYSTEM**

(30) Priority: 22.09.2022 CN 202211158749
(71) Applicant: xFusion Digital Technologies Co., Ltd., Zhengzhou, Henan 450000 (CN)
(72) Inventor: HUANG, Tao, Zhengzhou, Henan 450000 (CN); LIANG, Yonggui, Zhengzhou, Henan 450000 (CN); KOU, Guixiang, Zhengzhou, Henan 450000 (CN)
(74) Representative: MERH-IP Matias Erny Reichl Hoffmann Patentanwälte PartG mbB
(86) International application number: PCT/CN2023/115601
(87) International publication number: WO 2024/060944

(57) **Abstract**

Embodiments of this application provide a key-value storage method and system. The system and method are applied to a key value solid state drive containing a first memory chip and a second memory chip. The first memory chip is an SCM chip, and the second memory chip is a flash memory chip. The method comprises receiving a write instruction containing a first key and a first value, querying whether the metadata contains the first key, writing the first key into the first memory chip if the first key does not exist in the metadata, writing the first value into the second memory chip, and updating the metadata. The embodiments of the present application store keys and values in different chips to optimize the data layout, which alleviates the problem of write amplification, improves the efficiency of concurrent access, and further enhances the performance and service life of the KVSSD.

## Description

This application claims priority to Chinese Patent Application No. 202211158749.X, filed with the China National Intellectual Property Administration on September 22, 2022 and entitled "KEY-VALUE STORAGE METHOD AND SYSTEM", which is incorporated herein by reference in its entirety.

### TECHNICAL FIELD

The application relates to the field of storage technologies, and in particular, to a key-value storage method and system.

### BACKGROUND

Key-value storage systems are widely used throughout the storage ecosystem. Currently, there is a new type of key-value storage system based on a key value solid state drive (KVSSD), wherein keys and values are stored continuously in a flash memory chip of a KVSSD.

The foregoing data storage method may affect the performance of the KVSSD, leading to problems such as write amplification and low concurrent access performance. Therefore, how to improve the performance of the KVSSD is a problem to be solved.

### SUMMARY

Embodiments of the present application provide a key-value storage method and system to improve the performance of KVSSDs.

According to some embodiments, a first aspect of an embodiment of the present application provides a key-value storage method applied to a key value solid state drive containing a first memory chip and a second memory chip. The first memory chip is a storage-class memory (SCM) chip. The second memory chip is a flash memory chip. The storage method comprises receiving a write instruction containing a first key and a first value, querying whether metadata contains the first key, writing the first key into the first memory chip and the first value into the second memory chip if there is no first key in the metadata, and updating the metadata.

The above data layout method which adopts that stores keys in SCM chip and values in flash chip. The key and value are stored separately in different chips and can be concurrently accessed through their corresponding chip interfaces, which improves the concurrent access performance and leverages the large bandwidth of the KVSSD. Further, storing the key in the SCM chip requires no page-granularity alignment operation. The SCM chip is byte-addressable and has a smaller read unit than the flash memory chip. Therefore, the speed of accessing the key is increased to some extent.

In some embodiments, writing the first value to the second memory chip comprises according to the attributes of the first value, selecting one out of the first memory chip and the second memory chip as a target memory chip to write the first value, and updating the metadata, wherein the attributes of the first value comprises at least one of the following: the length of the first value and the update frequency of the first value.

The above data layout method which adopts that the value is selectively stored in the SCM chip or the flash memory chip. Based on the attributes of the value, as well as the characteristics of the SCM chip and the flash memory chip, reasonable data storage is performed to fully leverage the advantages of each type of chip and improve the performance of the KVSSD. If both the key and value are stored in the SCM chip, in one aspect, the page-granularity alignment operation is not required, and the characteristics of the SCM chip including overwrite capability and being byte-addressable, enable a faster read/write speed than the flash memory chip, and in another aspect, the erasing and writing life of the SCM chip is longer than that of the flash memory chip. Storing the key and the value in the SCM chip can effectively reduce the erasure operations required for the flash memory chip caused by Storing the key and the value in the flash memory chip, and prolong the service life of the flash memory chip and the key value solid state drive.

In some embodiments, selecting one out of the first memory chip and the second memory chip as the target memory chip based on the attributes of the first value to write the first value comprises selecting the first memory chip as the target memory chip to write the first value if the length of the first value is shorter than a preset threshold, and selecting the second memory chip as the target memory chip to write the first value if the length of the first value is greater than or equal to the preset threshold.

The above data layout method uses the length of the value and the storage capacity characteristics of the SCM chip and the flash memory chip for reasonable data storage, and the advantages of each chip are fully utilized to improve the performance of the Solid State Drive. Specifically, as the flash memory chip of a key value solid state drive provides sufficient storage space, a first value with a larger length may be written to the flash memory chip with larger storage space. Accordingly, a first value with a shorter length is written into the SCM chip with smaller storage space.

In some embodiments, selecting one out of the first memory chip and the second memory chip as the target memory chip based on the attributes of the first value to write the first value comprises selecting the first memory chip as the target memory chip to write the first value if the update frequency of the first value is greater than or equal to a preset frequency, and selecting the second memory chip as the target memory chip to write the first value if the update frequency of the first value is lower than the preset frequency.

According to the method above, the attribute of update frequency, as well as the service life of the SCM chip and that of the flash memory chip are taken into account to carry out reasonable data storage in order to fully leverage the advantages of each chip and improve the performance of the Solid State Drive. Specifically, the erasing and writing life of the SCM chip is longer than that of the flash memory chip. Therefore, can choose to write the first value with a higher update frequency into the SCM chip. Accordingly, the first value with a lower update frequency is written into the flash memory chip. The foregoing arrangement is beneficial to avoiding frequent erasing and writing on the flash memory chip, effectively prolonging the service life of the flash memory chip.

In some embodiments, based on the attributes of the first value, either of the first memory chip and the second memory chip is selected as the target storage chip to write the first value and the metadata is updated. Before this, the method also includes, if there is a first key in the metadata, determining the storage space of the current value corresponding to the first key according to the metadata and processing the storage space of the current value to invalidate the current value.

In the foregoing method, only the value needs to be updated in the updating process without the existing first key being updated in order to alleviate the problem of write amplification and prolong the service life of the KVSSD.

In some embodiments, processing the storage space of the current value to invalidate the current value comprises: releasing the storage space of the current value to delete the current value if the storage space of the current value is the first memory chip, wherein the storage space of the released current value is writable; if the storage space of the current value is the second memory chip, adding an invalid identifier to the storage space of the current value to invalidate the current value, wherein the storage space of the current value with the invalid identifier is writable.

The foregoing method is provided to process the current value to be updated during the updating of the value. For the SCM chip, the storage space of the current value can be cleared directly and becomes writable. Based on the characteristic of the flash memory chip that requires erasing before writing, the storage space of the current value to be updated is marked as invalid and erased in the subsequent garbage collection operation or before writing other data and becomes writable.

In some embodiments, the method further comprises writing the first value to the first memory chip and overwriting the storage space of the current value with that of the first value, if the current value is stored in the first memory chip and the length of the current value is not shorter than the length of the first value.

The foregoing method, which combines with the characteristic of the SCM chip that supports overlay writing, provides a method for updating the first value. If the length of the current value is greater than or equal to that of the first value, the first value can be directly written into the storage space of the current value. There is no need to perform the judgment step of the target memory chip, and there is no need to reallocate new storage space, which improves the write speed.

In some embodiments, the method further comprises receiving a delete instruction ,the delete instruction contains a first key, make sure the metadata contains the first key, determining the storage space of the first value according to the storage location of the first value, releasing the storage space of the first value if the first value is stored in a first memory chip, marking the storage space of the first value as invalid if the first value is stored in a second memory chip, releasing the storage space of the first key, and updating the metadata.

In the foregoing method, if the first value is stored in the SCM chip, executing the delete command only requires accessing the SCM chip without accessing the flash memory chip. Access to the SCM chip is faster than access to the flash memory chip.

In some embodiments, the metadata is stored in the first memory chip, and the Solid State Drive further contains dynamic random access memory. The storage method further comprises, after power-on, the metadata is read from the first memory chip and written into the DRAM for querying and updating the metadata in the dynamic random access memory.

In the foregoing method, the metadata is stored in a nonvolatile storage medium when power is not on to avoid data loss. After power-up, the metadata is read into the dynamic random access memory for frequent access. On one aspect, access to a dynamic random access memory is faster than access to an SCM chip. On another aspect, direct access to the metadata stored in an SCM chip may affect access performance to keys or values stored in the SCM chip.

According to some embodiments, a second aspect of the present application provides a key-value storage system comprising a host and a key value solid state drive, wherein the key value solid state drive comprises a controller, a first memory chip and a second memory chip. The first memory chip is a memory SCM chip, and the second memory chip is a flash memory chip. The controller connected with the host is configured to receive a write instruction from the host, wherein the write instruction contains a first key and a first value. The controller is configured to query whether metadata contains the first key. The controller is also configured to write the first key to the first memory chip if the first key does not exist in the metadata, selecting one out of the first memory chip and the second memory chip as a target memory chip according to the attributes of the first value to write the first value, and updating the metadata.

The key-value storage method and system provided by the present application are applied to a key value solid state drive, the key value solid state drive including a first memory chip and a second memory chip, wherein the first memory chip is an SCM chip and the second memory chip is a flash memory chip. The method comprises receiving a write instruction including a first key and a first value, querying whether the metadata contains the first key, writing the first key into the first memory chip if the first key does not exist in the metadata, writing the first value into the second memory chip, and updating the metadata. The embodiments of the present application store keys and values in different chips to optimize the data layout, which alleviates the problem of write amplification, improves the efficiency of concurrent access, and enhances the performance and service life of the KVSSD.

### BRIEF DESCRIPTION OF DRAWINGS

The drawings, which are incorporated into and constitute a part of the description, illustrate embodiments consistent with the present application and together with the specification are used to explain the principles of the embodiments of the present application.
FIG. 1 shows a schematic diagram of a structure of a key-value (KV) storage system based on a block solid state drive;
FIG. 2 shows a structure of a KV storage system based on a key value solid state drive;
FIG. 3 is a typical schematic diagram of a key-value data layout;
FIG. 4 is a schematic diagram of a structure of a key-value storage system according to the embodiments of the present application;
FIG. 5 is the first schematic flowchart of a key-value storage method according to the embodiments of the present application;
FIG. 6 is the second schematic flowchart of a key-value storage method according to the embodiments of the present application;
FIG. 7 is the third schematic flowchart of a key-value storage method according to the embodiments of the present application;
FIG. 8 is the fourth schematic flowchart of a key-value storage method according to the embodiments of the present application;
FIG. 9 is the fifth schematic flowchart of a key-value storage method according to the embodiments of the present application;
FIG. 10 is the sixth schematic flowchart of a key-value storage method according to the embodiments of the present application;
FIG. 11 is the seventh schematic flowchart of a key-value storage method according to the embodiments of the present application;
FIG. 12 is a schematic diagram of a structure of a key-value storage system according to the embodiments of the present application;
FIG. 13 is a schematic diagram of a key-value storage apparatus according to the embodiments of the present application;
FIG. 14 is a schematic diagram of an electronic device according to the embodiments of the present application.

With the foregoing figures, certain embodiments of the present application have been illustrated and described in more detail below. These drawings and written description are not intended to limit the scope of the inventive concepts in any way, but rather to illustrate the concepts of the present application to those skilled in the art by reference to specific embodiments.

### DESCRIPTION OF EMBODIMENTS

The following provides in-detail description of the exemplary embodiments, examples of which are illustrated in the accompanying drawings. When the following description refers to the accompanying drawings, the same numbers in different drawings represent the same or similar elements unless otherwise indicated. The embodiments described in the following exemplary embodiments do not represent all embodiments consistent with the present application. Rather, they are merely examples of apparatus and methods consistent with certain aspects of the application, as detailed in the appended claims.

A key-value (KV) pair is a simple form of organization in a database. The key in the key-value pair indicates the keywords used to find the physical storage location of the data written by a user, and the value in the key-value pair indicates the physical storage location of the data or represents the data itself. In the process of reading data, a user needs to find the key of the data to be read first, then finds the value indicated by the key of the data to be read, obtains the data to be read according to the value, and finally completes the data reading operation.

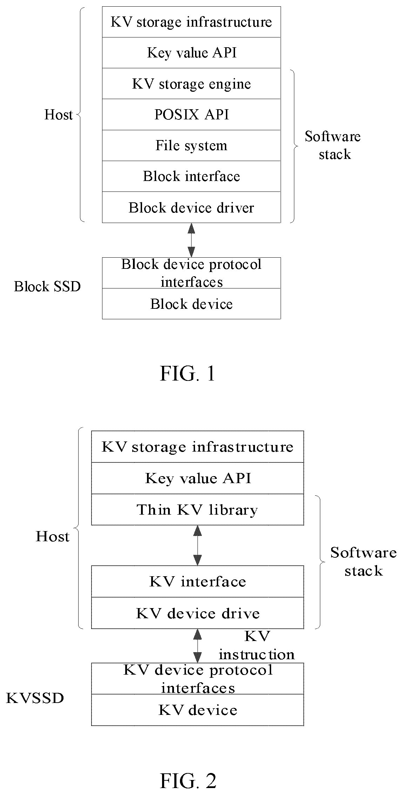

A key-value (KV) storage system is a system that stores data in a key-value manner. KV storage systems are widely used in the storage ecosystem. FIG. 1 shows a schematic diagram of a structure of a KV storage system based on a block solid state drive, which includes a host and a block solid state drive. The host may be any system and/or apparatus that has a need to write or read data and communicates with a block solid state drive. For example, the host may be a computing device, a personal computer, a portable computer, a workstation, a server, a router, a network device, a personal digital assistant, a digital camera, a digital telephone, a processor, an operating system, or a combination thereof.

In practice, the host and the block solid state drive shown in FIG. 1 may be integrated into a single storage device, such as the host includes a block solid state drive. Alternatively, the host and the block solid state drive may be in two independent devices. For example, the block solid state drive is remote from the host and connected with the host through a wireless communication link. FIG. 1 does not limit the positional relationship of the host and the block solid state drive.

As shown in FIG 1, the host includes: a KV storage infrastructure layer, a KV application programming interface (key value API), and a software stack between the KV application programming interface and the block solid state drive. The software stack shown in FIG. 1 includes: a KV storage engine layer, a portable operating system API (POSIX API), a file system layer, a block interface, and a block device driver layer. The block solid state drive includes a block device protocol interface and a block device. The block device protocol interface includes the AHIC (Advanced Host Controller Interface) protocol and the NMVe (Non-Volatile Memory Express) protocol.

The access process of a KV storage system shown in FIG. 1 is as follows: instructions issued by application developers or technical personnel at the infrastructure layer of a KV storage system are delivered down through the KV application programming interface, the KV storage engine layer, the portable operating system interface, the file system layer, the block client protocol interface, and the block device driver layer in sequence, and finally access the block device through the block device protocol interface on the block solid state drive. Data or feedback from the block device are then passed upward to the KV storage infrastructure layer. It is obvious that, during the information exchange process, the instructions issued by application developers or technical personnel have to pass through a software stack with multiple software layers to access a block solid state drive. These software layers may greatly impact the access to KV data.

FIG. 2 shows a structure of a KV storage system based on a key value solid state drive, which includes a host and a key value solid state drive. The host may be any system and/or apparatus that has a need to write data or read data and communicates with a KVSSD. For example, the host may be a computing device, a personal computer, a portable computer, a workstation, a server, a router, a network device, a personal digital assistant, a digital camera, a digital telephone, a processor, an operating system, or a combination thereof.

In practice, the host and the KVSSD shown in FIG. 2 may be integrated into a single storage device, such as the host including a KVSSD. Alternatively, the host and the KVSSD may be in two independent devices. For example, the KVSSD is remote from to host and connected with the host through a wireless communication link. FIG. 2 is not intended to limit the position relationship between the host and the block solid state drive.

As shown in FIG. 2, the host includes a KV storage infrastructure layer, a key value API, and a software stack between the KV application programming interface and the KVSSD. The software stack shown in FIG. 2 includes a thin KV library, a KV interface, and a KV device drive layer (KV Device Drive). The KVSSD includes a KV device protocol interface and a KV device.

Compared with FIG 1, the host software stack of the KV storage system shown in FIG. 2 is lighter. The access process to the KV storage system shown in FIG. 2 is as follows: The instructions issued by program developers and technical personnel at the KV storage infrastructure layer successively pass through the KV application programming interface, the thin KV library, the KV client protocol interface and the KV device drive layer and access the KV device through the KV device protocol interface. Data or feedback from the KV device is passed upward to the KV storage infrastructure layer.

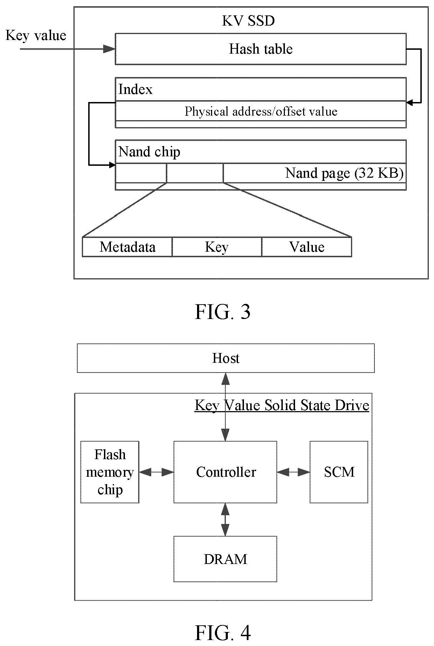

FIG. 3 shows a typical key-value data layout in which metadata, keys, and values are stored continuously in a flash memory chip. (The Nand chip in FIG. 3 has a storage capacity of 32 KB per Nand page). Based on the foregoing data storage method, the execution process of instructions is as follows: query the hash key table according to the key information and/or value information in a KV instructions to obtain the index address; and access the keys and values stored in the flash memory chip based on the index address. The index address is a physical location or physical offset.

In practice, the data storage method will affect the performance of a KVSSD. Specifically, the flash memory chip has the read/write characteristic that requires erasing before writing, that is, the data on the flash memory chip cannot be updated in situ. When the value is updated, in addition to read, modification and write operations on the value, read and write operations will also be performed to the key. The operations to the key are invalid and may cause the problem of write amplification (WA). In another example, when an upper-layer application accesses the key and the value concurrently, as the key and the value are stored in the same chip that has only one single access interface, the key and value can only be accessed in sequence instead of concurrently. In this way, an advantage, that is high bandwidth, of the KVSSD is not fully utilized. Therefore, how to improve the performance of the KVSSD is a problem to be solved.

It should be said that write amplification means that the amount of physical data actually written in is larger than the amount of data written by the user. An solid state drive works by erasing old data before writing in new data. The mismatch in unit size between the old data erased and the new data written in causes write amplification. For example, a page is the smallest unit of write operations, and each page is 4 KB. A block is the smallest unit of erasing operations, and each block is composed of 64 or 128 pages. For example, when only one page of new data is to be written and there are no spare pages left in a single block and there are invalid data that can be erased, the valid data in a block is migrated to the over-provisioning (OP) sauce or cache before erasing the block, and then the new data together with the valid data are written into the block. During the operations mentioned above, the physical data amount actually written in includes one page of new data and the original valid data in the block, so that the physical data amount actually written in is larger than the data amount written by the user. The Incremental write operation increases the bandwidth consumption of the solid state drive, reduces its random write performance, and shortens its service life.

Further, the OP space is a hidden space in the solid state drive managed by the master control chip and is unavailable to a user. This hidden space mentioned above is reserved for master control on optimization operations, such as garbage collection (GC) and wear leveling. Although larger OP space means more blocks available for replacement and longer SSD service life, more storage space is wasted.

The key-value storage method and system provided in the embodiments of this application, by storing keys and values separately on different chips, has achieved optimization of data layout. The method and system are configured to be beneficial to alleviate the write amplification, increase the efficiency of concurrent access, improve service performance, and prolong service life.

The technical solutions in the embodiments of this application and how the technical solutions in the embodiments of this application solve the technical problems mentioned above are clearly described as follows with reference to the specific embodiments. The following embodiments may be combined with each other, and the same or similar concepts or processes may not be repeated in some embodiments. Embodiments of the present application will be described with reference to the accompanying drawings.

### Embodiment 1

FIG. 4 is a structural diagram of a key-value storage system provided in the embodiments of the present application. The key-value storage system includes a host and a key value solid state drive. The key value solid state drive includes a controller, a first memory chip, a second memory chip, and dynamic random access memory (DRAM). The first memory chip is a storage-class-memory (SCM) chip. The second memory chip is a flash memory chip.

The host may be any system and/or device that has the need to write data or read data and communicates with a key value solid state drive. For example, the host may be a computing device, a personal computer, a portable computer, a workstation, a server, a router, a network device, a personal digital assistant, a digital camera, a digital telephone, a processor, an operating system, or a combination thereof.

The host is connected with the controller of the key value solid state drive. In this embodiment, the controller may be configured to receive a write instruction, a delete instruction, and a query instruction from the host. Based on these instructions, the controller may also be configured to perform corresponding operations on the first memory chip, the second memory chip and the dynamic random access memory.

This embodiment uses a Nand flash memory chip is used as an example. Further, Nand flash chips are generally classified into the following four types: quad-level cell (QLC) chips that store four bits of data in a single memory cell, triple-level cell (TLC) chips that store three bits of data in a single memory cell, multi-level cell (MLC) chips that store two bits of data in a single memory cell, and single-level cell (SLC) chips that store one bit of data in a single memory cell. The write delay, erase delay, and erase life of the four types of Nand flash chips mentioned above are different. For example, the read delay, write delay and erase delay of an SLC chip, that of an MLC chip, that of a TLC chip, and that of a QLC chip increase in sequence, while the erase life of the four types of chips gradually reduces.

In this embodiment, SCM chips are classified into the following four types: phase-change memory (PCM); resistive random-access memory (ReRAM); magnetic random access memory MRAM); Nantero's CNT random access memory (NRAM).

Further, comparison is made between the characteristics of an SCM chip and a Nand flash memory chip. The SCM chip features lasting and fast byte-level access. The access delay of an SCM medium is generally less than 1 µs, which is two to three orders of magnitude faster than that of a Nand flash memory chip. The read and write operations of the SCM chip are not restricted by erasing before writing and the operation process is simpler. In addition, the erasing life of the SCM chip may reach 10⁸ to 10¹² times, which is higher than that of the flash memory chip (which may reach 10³ to 10⁵ times). Furthermore, the SCM media outperforms the Nand flash chip in data retention.

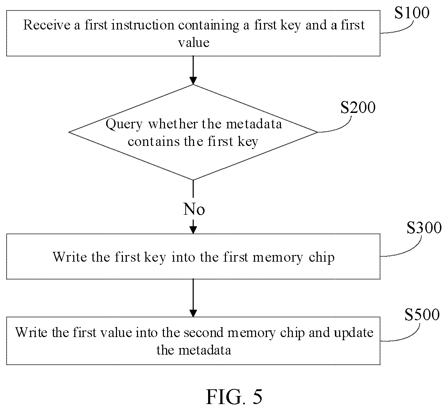

FIG. 5 is the first flowchart of the key-value storage method provided in the embodiments of the present application. The key-value data storage method provided in this embodiment is applicable to the key value solid state drive shown in FIG. 4. The execution subject of the method may be the controller in the key value solid state drive.

As shown in FIG. 5, the method may include the following steps:
S100. Receive a write instruction comprising a first key and a first value;
S200. Query whether the metadata contains the first key;
S300. If there is no first key in the metadata, write the first key in step S100 into a first memory chip and perform step S500.
S500. Write the first value in step S100 into a second memory chip and update the metadata.

The metadata is used for recording a mapping relationship among a key, the storage location of the key, the storage location of the value corresponding to the key, and the attributes of the value corresponding to the key. The storage location of the key is used to indicate the storage space of the key in the first memory chip. The storage location of the value is used to indicate the storage space of the value in the first memory chip or the second memory chip.

In a possible embodiment, metadata is stored in the flash memory chip. When step S200 is performed, the controller queries the metadata by accessing the flash memory chip. In another possible embodiment, the metadata is stored in the SCM chip. When step S200 is performed, the controller queries the metadata by accessing the SCM chip. Given that metadata may be updated frequently, metadata may be stored in the SCM chip to avoid erase and write operations to the flash memory chip and prolong the service life of a flash memory chip.

Still, in another possible embodiment, when the KVSSD is not in a power-on state, the metadata is stored in the SCM chip or the flash memory chip. After the KVSSD is powered on, the metadata is read into a DRAM shown in FIG. 4. When step S200 is performed, the controller queries the metadata by accessing the DRAM. Further, the metadata update operation in step S500 is also performed in the DRAM, which reduces erase operations on the SCM chip. In addition, the speed of accessing the DRAM is faster than that of accessing the SCM chip so that the access performance is improved to some extent.

Further, in step S 100, the controller receives a write instruction from the host. The write instruction is, for example, PUT (key 1, value 1), including the first key (key 1) and the first value (value 1). Upon receiving the write instruction, the controller determines whether the first key exists in the metadata. If there is no first key recorded in the metadata, both the first key and the first value are newly written.

The first key is written into the first memory chip (specifically, the SCM chip). Compared with storing the first key in the flash memory chip, storing the first key in the SCM chip can avoid operations of page-granularity alignment and causing Nand flash memory space fragments. Further, accessing the SCM chip through a memory bus has a higher read and write speed. Compared with the flash memory chip, the SCM chip has smaller alignment granularity and smaller read and write units. The read and write duration of a single read or write operation to the SCM chip is in the precision of 100 nanoseconds, while the read and write duration of the Nand flash memory chip is in the precision of microseconds. Therefore, when the first key is stored in the SCM chip, the read and write speed becomes faster. In addition, the erasing life of the SCM chip is longer than that of the flash memory chip. Storing keys in the SCM chip may effectively reduce the erase operations caused by saving keys in the flash memory chip, prolong the service life of the flash memory chip, and further extend the service life of the key value solid state drive.

Page-granularity alignment: There are sectors on the physical layer of the flash memory chip. A sector is the smallest write unit (4 KB for example). When 4 KB data is actually written, the 4 KB storage space allocated to the logical layer is not aligned with the size of the sector on the physical layer. Therefore, the 4 KB data is stored in two sectors. Accordingly, the operating system actually performs write operations twice, leading to lower write efficiency. Page-granularity alignment is configured to improve read and write efficiency.

Space fragments in the flash memory chip: Each time data is written into the flash memory chip, page-granularity alignment is performed, leading to additional invalid data for page-granularity alignment. When 3 KB data is written, 1 KB invalid data will be created for page-granularity alignment. The space occupied by the invalid data represents the space fragment. The more space fragments, the lower the storage space utilization of the flash memory chip.

Further, in step S500, updating the metadata includes adding information about the first key newly written to the metadata, such as the identifier characterizing the first key, the storage location of the first key, and adding information about the newly written first value, such as the storage location of the first value and the length of the first value. The metadata also records the mapping relationship between the first key and the first value. The metadata may be a hash table, an ordered array, a binary indexed tree, and other index models.

In this embodiment, keys are stored in the SCM chip and values are stored in the flash memory chip. As the keys and values are separately stored in different chips, the keys and values can be accessed simultaneously through their corresponding chip interfaces to realize concurrent access and fully utilize the bandwidth of a key value solid state drive.

In some embodiments, step S500, write the first value to the second memory chip and update the metadata, specifically comprises: S510, that is, according to attributes of the first value, select one out of a first memory chip and a second memory chip as a target memory chip to write the first value and update the metadata. The attributes of the first value include at least one of the following: the length of the first value and the update frequency of the first value.

In this embodiment, reasonable data storage is achieved by combining attributes of a value and characteristics of the SCM chip and the flash memory chip. A value may be stored in the flash memory chip or in the SCM chip, giving full play to the advantages of each chip and improving the performance of a solid state drive.

If the keys and values are stored in the SCM chip, on one aspect, page-granularity alignment is omitted to avoid Nand flash space fragments. Further, access to the SCM chip through a memory bus (memory bus) features faster read and write speed. Compared with the flash memory chip, the SCM chip has smaller alignment granularity and smaller read and write unit. The time for each read/write operation to the SCM chip is in the hundred-second level, and that to the Nand flash memory chip is in the microsecond level. Therefore, when the keys and values are stored in the SCM chip, the read/ write speed becomes faster. In addition, the erasing life of the SCM chip is longer than that of the flash memory chip. Storing keys in the SCM chip can effectively reduce the erasure operations caused by saving keys to the flash memory chip, prolong the service life of the flash memory chip, and further extend the service life of the key value solid state drive.

Based on the embodiment, the length of the first value serves as the basis for determining whether to store the value in the SCM chip or the flash memory chip. Step S510, select one out of a first memory chip and a second memory chip as a target memory chip to write the first value according to the attributes of the first value, specifically comprises: if the length of the first value is shorter than the preset threshold, the first memory chip will be selected as the target memory chip to write the first value; if the length of the first value is greater than or equal to the preset threshold, the second memory chip will be selected as the target memory chip to write the first value.

Specifically, due to process limitations, in the key value solid state drive, the storage space of the SCM chip is lower than that of the flash memory chip, and the cost of the SCM chip is higher than that of the flash memory chip. Therefore, a first value with a larger length may be written to the flash memory chip with larger storage space, and the first value with a smaller length may be written to the SCM chip with smaller storage space.

Optionally, the value of the preset threshold may be determined according to the lengths of the values to be written to the key value solid state drive. For example, 80% of first values are written to the flash memory chip and 20% of the first values are written to the SCM chip; alternatively, for example, 90% of the first values are written to the flash memory chip and 10% of the first values are written to the SCM chip. In practice, the value of a preset threshold may be determined according to the storage capacity of the flash memory chip and the SCM chip in the key value solid state drive in order to avoid the situation where the storage space of the SCM chip is insufficient.

In some embodiments, the first value is written in an append-only write manner to a storage space of the flash memory chip. The storage space adopts zone-based management, and the storage capacity of each zone is an integer multiple of a block. Zone-based management enables data from different applications to be stored in specific zones. The implementation method of append-only write can be achieved by referring to the related art.

For example, if a solid state drive stores three files, File A, File B, and File C, each containing multiple pieces of data. If zone-based management is not adopted, the multiple pieces of data in the three files are randomly written and stored in different pages of the same block. It may happen that multiple pages of a block store data belonging to different files. For example, a block may contain data from both File A and File B. It should be noted that the drive of the key value solid state drive is characterized in that the write unit is a page and the erase unit is a block (usually, 64 or 128 pages constitute a block.), leading to a mismatch between the write unit and the erase unit. Therefore, when File C is to be deleted, its corresponding multiple data are distributed on the pages of different blocks. That is, a block may contain both invalid data from File C that needs to be cleaned up and valid data from File B and/or File A that needs to be retained. During the garbage collection, valid data in the block needs to be moved to the over-provisioning space before the block can be erased. Frequent erase operations may shorten the service life of the key value solid state drive.

If the zone-based management is adopted, multiple pieces of data of the same file are written to zones in an append-only write manner. It should be noted that each zone stores data of the same file. If one zone is not enough to store data from a file, the remaining data is written to a second zone. And so on, multiple data of the same file can be stored in multiple zones. When one file is deleted, the data stored in the corresponding zones becomes invalid. As the storage capacity of a zone is an integer multiple of a block, the storage capacity of the zone is also an integer multiple of the erase unit. Therefore, no over-provisioning space is needed for storing valid data and no garbage collection operation is needed, thereby reducing erasing operations and effectively prolonging service life.

In some embodiments, the update frequency of a first value serves as the basis for determining whether the value is to be stored in the SCM chip or the flash memory chip. In step S510, according to the attributes of the first value, either is selected from the first memory chip and the second memory chip as the target memory chip to write the first value. This step comprises: if the update frequency of the first value is higher than or equal to the preset frequency, select the first memory chip as the target memory chip to write the first value; if the update frequency of the first value is lower than the preset frequency, select the second memory chip as the target memory chip to write the first value.

Specifically, the erasing life of the SCM chip is longer than that of the flash memory chip, and a first value with a smaller update frequency can be written into the flash memory chip. A first value with a higher update frequency is written into the SCM chip to avoid frequent erasing operations on the flash memory chip and effectively prolong the service life of the flash memory chip.

The update frequency is the number of times that the corresponding value of the first key is updated in a preset time period. Optionally, each time the value corresponding to the first key is updated, the controller increases the update count by one. The value of the preset frequency can be adjusted according to the update frequency of the value written to the key value solid state drive, achieving, for example, 80% of first values are written to the flash memory chip and 20% of the first values are written to the SCM chip; or, for example, 90% of the first values are written to the flash memory chip and 10% of the first values are written to the SCM chip. In practice, the value of a preset frequency may be determined according to the storage capacity of the flash memory chip and the SCM chip in the key value solid state drive in order to avoid the situation that a large number of first values are written to the SCM chip, resulting in insufficient storage space.

In some embodiments, a combination of the length of the first value and the update frequency of the first value is used as the basis for determining whether the value is to be stored in the SCM chip or the flash memory chip. First values are then divided into four categories: first values with large length and high update frequency; first values with large length and low update frequency; first values with short length and high update frequency; and first values with shorter length and low update frequency.

In the key value solid state drive, the storage capacity of the SCM chip is lower than that of the flash memory chip, and the erase life of the SCM chip is longer than that of the flash memory chip. Specifically, a first value with a large length and a low update frequency is stored in the flash memory chip, which not only utilizes the advantage of large storage capacity of the flash memory chip, but also does not greatly affect the service life of the flash memory chip. A first value with a short length and a high update frequency is stored in the SCM chip, which not only utilizes the advantage of long erasing life of the SCM chip and prolongs the service life of the flash memory chip, but also does not occupy too much storage space in the SCM chip.

For a first value with a large length and a high update frequency and a first value with a short length and a low update frequency, reasonable allocation is conducted based on the practical application scenario of the key value solid state drive as well as the storage capacity of the SCM chip and the flash memory chip in the key value solid state drive in order to fully utilize the advantages of the SCM chip and the flash memory chip and optimize the performance of key value solid state drive.

In some embodiments, if the storage space of the SCM chip is sufficient, the value with a large length and a high update frequency may be stored in the SCM chip to reduce the erase operations on the flash memory chip and prolong the service life of the KVSSD. When the storage space of the SCM chip is limited, a value with a large length and a high update frequency may be stored in the flash memory chip to avoid the situation where the storage space of the SCM chip is insufficient.

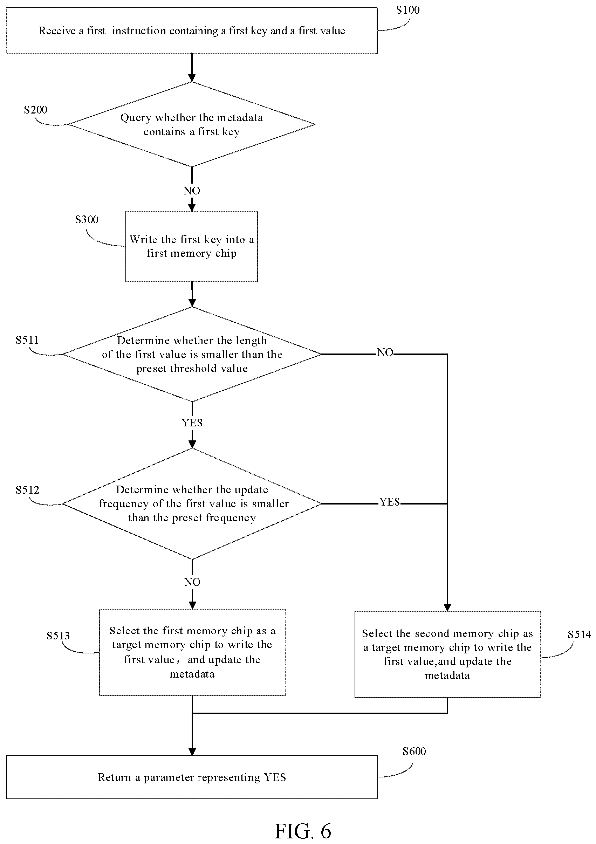

FIG. 6 is the second flowchart of the key-value storage method provided in the embodiments of the present application. A first value with a short length and a high update frequency is written into an SCM chip (first memory chip), and other types of first values are written into a flash memory chip (second memory chip).

As shown in FIG. 6, the method comprises the following steps:
S100. Receive a write instruction including a first key and a first value;
S200. Query whether the metadata contains the first key;
S300. If the first key does not exist in the metadata, write the first key into the first memory chip, and execute step S511.
S511. Determine whether the length of the first value is smaller than the preset threshold value, and if so, execute S512; otherwise, execute S514;
S512. Determine whether the update frequency of the first value is smaller than the preset frequency, and if so, execute step S514; otherwise, execute step S513;
S513: Select the first memory chip as the target memory chip to write the first value;
S514. Select the second memory chip as the target memory chip to write the first value;
S600. Return a parameter representing YES.

In step S600, a parameter representing "YES" is returned, indicating that the key value solid state drive has completed the instruction execution and is providing feedback to the connected host. Optionally, "OK" or "1" is returned to indicate completion of the write operation. Accordingly, "NOK" or "0" is returned to indicate that the execution of the instruction has failed.

In this embodiment, by writing as many values as possible to a flash memory chip (second memory chip), keys and values are separately stored to improve the performance of concurrent access.

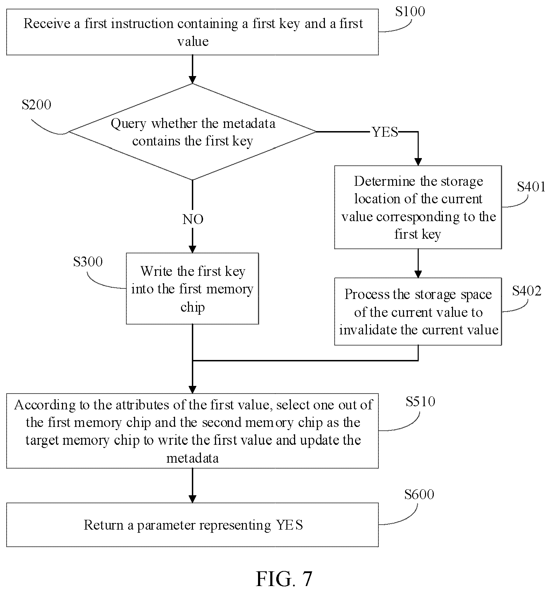

FIG. 7 is the third flowchart of the key-value storage method provided in the embodiments of the present application. In some embodiments, steps before step S510 where one is selected from the first memory chip and the second memory chip as the target memory chip to write the first key and to update the metadata according to attributes of a first key, also comprises:
S401. If the metadata contains the first key, determine the storage space of the current value corresponding to the first key according to the metadata;
S402. Process the storage space of the current value to invalidate the current value.

Specifically, the write instruction is configured to perform update operation. If the first key is recorded in the metadata, it indicates that an initial value (i.e. a current value) corresponding to the first key has been stored in the solid state drive, and the write instruction is used to perform an update operation that updates the value corresponding to the first key from the current value to the first value. In the process of updating the value, there is no need for the redundant operation of reading and writing the current first key, thereby reducing the problem of write amplification and prolonging the service life of the KVSSD.

Further, as shown in FIG. 7, in step S510, updating the metadata is further configured to add information about the newly written first value and update the mapping between the first key and the current value in the metadata to that between the first key and the first value.

In some embodiments, step S402 involving processing the storage space of the current value to invalidate the current value, specifically comprises: if the current value is stored in a first memory chip, releasing the storage space of the current value to delete the current value; wherein the storage space of the released current value is writable; if the current value is stored in a second memory chip, adding an invalid identifier for the storage space of the current value in order to invalidate the current value; wherein the storage space of the current value with an invalid identifier is writable.

If the current value is stored in the flash memory chip, the storage space of the current value may be marked as invalid according to the erase-before-write characteristic of flash memory chips. When a zone is full, the entire zone can be erased through a reset command, making the zone writable. If the current value is stored in the SCM chip, the storage space of the current value can be directly released according to the feature of the SCM chip that does not erase the current value before writing.

In some embodiments, if the current value is stored in the first memory chip, releasing the storage space of the current value comprises: if the current value is stored in the first memory chip and the length of the current value is shorter than the length of the first value, releasing the storage space of the current value.

Specifically, if the current value is stored in the SCM chip, based on the overwrite characteristic of the SCM chip, when the length of the first value is shorter than the length of the current value, the old data (the current value) can be covered directly by the new data (the first value). The write speed is increased without the steps of determining the target memory chip and reallocating new storage space.

Further, if the current value is stored in a first memory chip and the length of the current value is not shorter than the length of the first value, the first value is written into the first memory chip, and the storage space of the first value covers that of the current value.

Specifically, if the length of the first value is not shorter than that of the current value, the storage space of the current value is released directly, wherein, overwrite operation is disabled to avoid overwriting valid data or incomplete data. Further, the target memory chip is redetermined according to the attributes of the first value.

When the length of the first value is shorter than the preset threshold, a new storage space is allocated in the SCM chip. Storing the value with short length in the SCM chip requires no page-granularity alignment, and the value can be read through a memory bus, further improving the performance of the KVSSD.

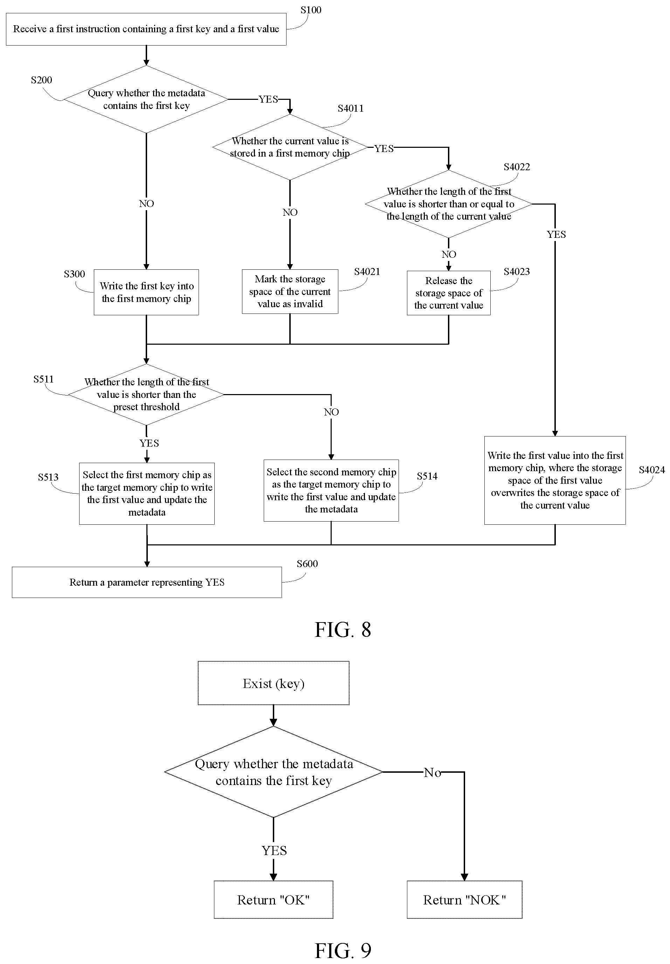

FIG. 8 is the fourth flowchart of the key-value storage method provided in the embodiments of the present application. The method comprises the following steps:
S100. Receive a write instruction including a first key and a first value;
S200. Query whether the metadata contains the first key. The metadata records the mapping relationship among the key, the storage location of the key, and the storage location and length of the value corresponding to the key.
S300. If there is no first key in the metadata, write the first key into a first memory chip and execute step S511.
S4011: If the first key exists in the metadata, determine whether the current value is stored in a first memory chip. If so, execute S4022; otherwise, execute S4021.
S4021. Mark the storage space of the current value as invalid and execute S511.
S4022. Determine whether the length of the first value is shorter than the length of the current value. If so, execute S4024; otherwise, execute S4023;
S4023. Release the storage space of the current value and execute S511.
S4024. Write the first value into a first memory chip (specifically, an SCM chip), wherein the storage space of the first value overwrites the storage space of the current value;
S511. Determine whether the length of the first value is shorter than the preset threshold. If so, execute S513; otherwise, execute S514;
S513: Select the first memory chip as the target memory chip to write the first value;
S514. Select the second memory chip as the target memory chip to write the first value;
S600. Return a parameter representing YES.

FIG. 9 is the fifth flowchart of the key-value storage method provided in the embodiments of the present application. As shown in FIG. 9, the key-value storage method provided in this embodiment comprises: receiving a query instruction that contains a first key with Exist (key) as an example in FIG. 9, wherein the query instruction is configured to query whether the metadata contains the first key; if it is determined that there is no first key in the metadata, returning a parameter representing "NO" ("NOK" as an example in FIG. 9); if it is determined that the metadata contains a first key, returning a parameter representing "yes" ("OK" as an example in FIG. 9).

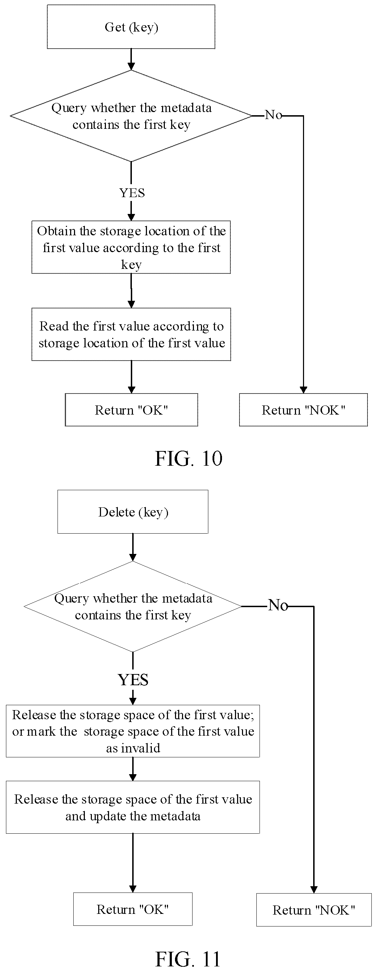

FIG. 10 is the sixth flowchart of the key-value storage method provided in the embodiments of the present application. As shown in FIG. 10, the key-value storage method provided in this embodiment comprises: receiving a read instruction that contains the first key, with GET (key) as an example in FIG. 10, wherein the read instruction is configured to read the value corresponding to the first key; if it is determined that there is no first key in the metadata, returning a parameter characterizing "NO"; if it is determined that the metadata contains the first key, obtaining the storage location of the corresponding value according to the first key; reading the value according to the storage location of the value and sending the value to the host system; and returning a parameter representing "Yes".

FIG. 11 is the seventh flowchart of the key-value storage method provided in the embodiments of the present application. As shown in FIG. 11, the key-value storage method provided in this embodiment comprises receiving a delete instruction (Delete (key) as an example) that contains a first key, determining that the first key exists in the metadata, identifying the storage space of the first value according to the storage location of the first value, directly releasing the storage space of the first value if the first value is stored in a first memory chip, marking the storage space of the first value as invalid and releasing the storage space of the first key if the first value is stored in the second memory chip, and updating the metadata.

Updating the metadata is configured to delete the information about the first key in the metadata, such as an identifier representing the first key and a storage location of the first key. Updating the metadata is also configured to delete information about the first value in the metadata, such as the storage location and the length of the first value, and to delete the mapping relation between the first key and the first value in the metadata.

According to FIG. 9 to FIG. 11, if the first value is stored in the SCM chip, only the SCM chip is accessed to execute the query, read and delete instructions without accessing the flash memory chip, thereby improving the access performance.

In some embodiments, metadata is stored in the first memory chip, and the solid state drive further includes dynamic random access memory (DRAM). The key-value storage method provided in this embodiment further comprises, after power-on, reading the metadata from the first memory chip and writing it into the dynamic random access memory for querying and updating the metadata.

Specifically, the metadata is queried when executing the read and delete instructions. When an SSD is not powered on, the metadata is stored in a non-volatile storage medium to avoid data loss. Due to faster access to the DRAM than to the SCM chip, reading metadata into the DRAM to perform frequent access after power-on is capable of improving access performance.

Further, after executing the write, update, delete and other instructions, the metadata is updated in the DRAM. Therefore, the updated metadata in the DRAM is returned to the SCM chip when the SSD is powered off, ensuring that the metadata read in the next power-on is accurate. Optionally, during the power-on process, the metadata in the DRAM can be synchronized to the SCM chip at a preset interval, which is similar to an automatic saving operation to handle unexpected situations such as power failure.

In summary, in this embodiment, adding a nonvolatile and byte-addressable SCM chip to the KVSSD as a way to store keys can assist in reducing the access and erase operations to the Nand memory chip, thereby improving the access performance and prolonging the service life of the KVSSD. Furthermore, Combined with the characteristics of SCM chip or flash memory chip, as well as the attribute of the value, the value is classified and stored to optimize the data layout, which is beneficial to improve the performance of key value solid state drive, wherein, when keys and values are stored in different memory chips, the performance of concurrent access is improved. Further, zone-based management of the flash memory chip provides better management on data and helps to remove over-provisioning space and leave more space for users. As zone-based management involves no garbage collection operation, it alleviates the problem of write amplification.

### Embodiment 2

This embodiment provides a key-value storage system that may be a server, a computer, a notebook computer, or a mobile phone terminal. In this embodiment, the key-value storage system as a server is used as an example to illustrate. The key-value storage system comprises a host and a key value solid state drive (KVSSD). The host and the KVSSD are connected by a KV device protocol interface. The host may be any system and/or device that has the need to write data or read data and communicates with the KVSSD. For example, the host may be a computing device, a personal computer, a portable computer, a workstation, a server, a router, a network device, a personal digital assistant, a digital camera, a digital telephone, a processor, an operating system, or a combination thereof.

According to FIG. 4, the key value solid state drive comprises a controller, a first memory chip, and a second memory chip. The first memory chip is an SCM chip and the second memory chip is a flash memory chip. The host is connected with the controller of the key value solid state drive. In this embodiment, the controller is configured to receive write, delete and query instructions from the host and to perform corresponding operations on the first memory chip, the second memory chip and dynamic random access memory based on the instructions.

The controller connected with the host is configured to receive write instructions from the host. A write instruction contains a first key and a first value. The controller is configured to query whether the first key exists in the metadata. The controller is configured to write the first key in the write instruction to the first memory chip when the first key does not exist in the metadata. The controller is further configured to write the first value to the second memory chip and update the metadata.

In this embodiment, keys are stored in the SCM chip and values are stored in the flash memory chip. As keys and values are stored separately in different chips, the keys and values can be accessed through their corresponding chip interfaces concurrently in order to improve the performance of concurrent access and utilize the large bandwidth of the KVSSD. Further, storing keys in an SCM chip requires no page-granularity alignment. The SCM chip has byte-addressable characteristics, which allows for smaller read units compared to flash memory chips, thereby improving the speed to access a key to some extent.

In some embodiments, the controller is specifically configured to select one out of the first memory chip and the second memory chip as the target memory chip to write the first value and update the metadata based on the attributes of the first value, wherein the attributes of the first value comprise at least one of the following: the length of the first value and the update frequency of the first value.

In some embodiments, the controller is specifically configured to: select the first memory chip as the target memory chip to write the first value if the length of the first value is shorter than a preset threshold and select the second memory chip as the target memory chip to write the first value if the length of the first value is greater than or equal to the preset threshold.

In some embodiments, the controller is specifically configured to: select the first memory chip as the target memory chip to write the first value if the update frequency of the first value is greater than or equal to a preset frequency, and select the second memory chip as the target memory chip to write the first value if the update frequency of the first value is smaller than a preset frequency.

In some embodiments, the controller is configured to identify the storage space of the current value corresponding to the first key based on the metadata if the first key exists in the metadata and process the storage space of the current value to invalidate the current value.

In some embodiments, the controller is specifically configured to release the storage space of the current value so that the current value is directly deleted if the storage space of the current value is the first memory chip; wherein the storage space of the released current value becomes writable. The controller is also configured to add an invalid identifier to the storage space of the current value to invalidate the current value if the storage space of the current value is the second memory chip, wherein the storage space of the current value with an invalid identifier becomes writable.

In some embodiments, the controller is further configured to write the first value to the first memory chip if the storage space of the current value is the first memory chip and the length of the current value is greater than or equal to the length of the first value, and overwrite the storage space of the first value with that of the current value.

In some embodiments, the controller is further configured to receive a delete instruction that includes a first key and determine that the metadata contains the first key. The controller is configured to determine the storage space of the first value based on the storage location of the first value. If the first value is stored in the first memory chip, the storage space of the first value is released. If the first value is stored in the second memory chip, the storage space of the first value is marked as invalid. The controller is configured to release the storage space of the first key and update the metadata.

In some embodiments, metadata is stored in ta first memory chip. As shown in FIG. 4, the key value solid state drive also includes a dynamic random access memory. The controller is further configured to read metadata from the first memory chip after power-up and write the metadata to the dynamic random access memory for querying and updating the metadata.

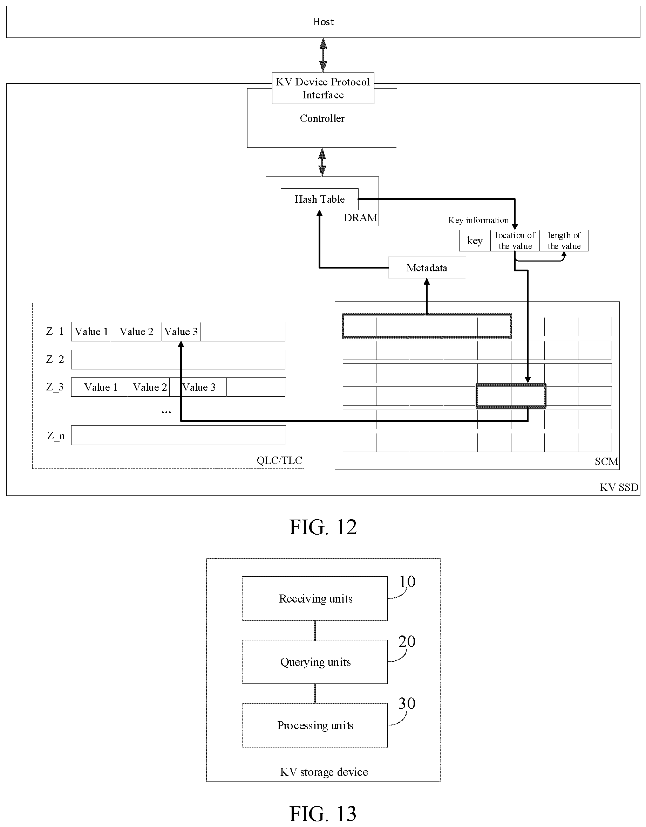

Fig 12 is a schematic diagram of another key-value storage system provided in the embodiments of the present application. As shown in FIG. 12, a second memory chip includes a storage space that managed by partitioned storage. The storage space supports writing a value whose length is not shorter than a preset threshold and/or whose update frequency is lower than the preset frequency in an append-only write manner.

Further, the flash memory chip may be a quad-level cell (QLC) chip that stores four bits of data in a single cell. The flash memory chip may be a triple-level cell (TLC) chip that stores three bits of data in a single cell. The flash memory chip may be a multi-level cell (MLC) chip that stores two bits of data in a single cell. The flash memory chip may be a single-level (SLC) cell chip that stores one bits of data in a single cell. This embodiment of the present application is not intended to limit the type of flash memory chip, which can be selected based on the characteristics of the four types of flash memory chips, such as read/ write delay, erase delay, erase and write service life.

As shown in FIG. 12, after power-on, the controller reads and writes metadata stored in the SCM chip into the DRAM chip. In FIG. 12, the metadata takes the hash table containing all key information as an example. After the read instruction from the host is received, the location and length of the corresponding value are determined according to the key in the instruction. According to the location of the value, the value stored in the flash memory chip is obtained.

In this embodiment, a nonvolatile and byte-addressable SCM chip is added to the KVSSD for storing keys, which reduces access and erase operations to the Nand memory chip, thereby improving the access performance and prolonging the service life of the KVSSD. Further, based on the characteristics of the SCM chip or flash memory chip and the attributes of the values, values are stored in different categories to optimize the data layout, improving the performance of KVSSD. When the keys and values are stored in different memory chips, the performance of concurrent access is improved. Further, the flash memory chip adopts zone-based management to optimize data management, which can remove the over-provisioning space and leave more space for users. Since the operation of garbage collection is not needed, the problem of write amplification is alleviated.

### Embodiment 3

FIG. 13 shows a schematic diagram of a key-value storage device according to the embodiments of the present application; the device may be realized by computer program, such as an application. Alternatively, the device may be realized by a medium that stores the associated computer programs, such as a USB flash drive or a cloud drive. Alternatively, the device may be realized by a physical device that integrates or installs the associated computer programs, such as a computer.

The device is applied to a solid state drive. The solid state drive comprises a first memory chip and a second memory chip, wherein the second memory chip is a flash memory chip (Nand Flash) and the first memory chip is an SCM chip.

As shown in FIG. 13, the storage device comprises: a receiving unit 10 for receiving a write instruction that comprises a first key and a first value, a querying unit 20 for querying whether the metadata contains the first key, and a processing unit 30 for writing the first key into the first memory chip if there is no first key in the metadata, and further for writing the first value to the second memory chip and updating the metadata.

In some embodiments, the processing unit 30 is specifically configured to select one out of the first memory chip and the second memory chip as the target memory chip to write the first value and update the metadata based on attributes of the first value, wherein the attributes of the first value include at least one of the following: the length of the first value and the update frequency of the first value.

In some embodiments, the processing unit 30 is specifically configured to select the first memory chip as the target memory chip to write the first value if the length of the first value is shorter than the preset threshold. The processing unit 30 is specifically configured to select a second memory chip as a target memory chip to write the first value if the length of the first value is greater than or equal to a preset threshold.

In some embodiments, the processing unit 30 is specifically configured to select the first memory chip as the target memory chip to write the first value if the update frequency of the first value is greater than or equal to the preset frequency. The processing unit 30 is specifically configured to select the second memory chip as the target memory chip to write the first value if the update frequency of the first value is lower than the preset frequency.

In some embodiments, before the processing unit 30 selects one of the first memory chip and the second memory chip as the target memory chip to write the first value according to the attribute of the first value, and updates the metadata, it is also used to determine the storage space of the current value corresponding to the first key according to the metadata if the first key exists in the metadata. The processing unit 30 is configured to process the storage space of the current value to invalidate the current value.

In some embodiments, the processing unit 30 is further configured to release the storage space of the current value so that the current value is deleted if the current value is stored in the first memory chip; wherein the storage space of the released current value becomes writable; the processing unit 30 is further configured to add an invalid identifier to the storage space of the current value to invalidate the current value if the current value is stored in the second memory chip; wherein the storage space of the current value with an invalid identifier becomes writable.

In some embodiments, the processing unit 30 is further configured to write the first value to the first memory chip and overwrite the storage space of the current value with the storage space of the first value, if the current value is stored in the first memory chip and the length of the current value is not shorter than that of the first value.

In some embodiments, the receiving unit 10 is further configured to receive a delete instruction that includes a first key. The querying unit 20 is configured to query whether the metadata contains the first key. The processing unit 30 is further configured to determine the storage space of the first value based on the storage location of the first value; if the first value is stored in the first memory chip, the storage space of the first value is released; if the first value is stored in the second memory chip, the storage space of the first value is marked as invalid. The processing unit 30 is further configured to release the storage space of the first key and update the metadata.

In some embodiments, metadata is stored in the first memory chip, and an solid state drive further comprises dynamic random access memory. The key-value storage device also comprises a preprocessing unit for reading metadata from the first memory chip after power-on and writing metadata into the dynamic random access memory for querying and updating the metadata.

In this embodiment, a nonvolatile and byte-addressable SCM chip is added to the KVSSD for storing keys to reduce the access and erasure operations to the Nand memory chip, improving the access performance and prolonging the service life of KVSSD. Furthermore, combined with the characteristics of SCM chip or flash memory chip, as well as the attributes of the value, the value is classified and stored to optimize the data layout, which is beneficial to improve the performance of KVSSD. When the keys and values are stored in different memory chips, the performance of concurrent access is improved. Further, the flash memory chip adopts zone-based management to optimize data management, which can remove the over-provisioning space and leave more space for users. Since the operation of garbage collection is not needed, the problem of write amplification is alleviated.

### Embodiment 4

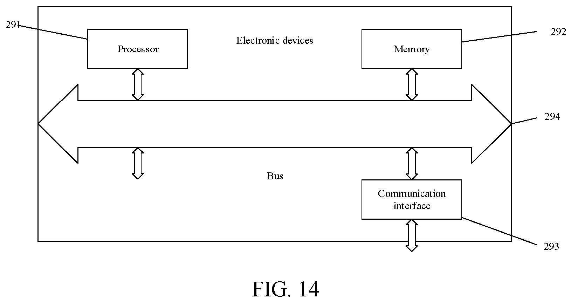

FIG. 14 shows a schematic diagram of an electronic device provided in the embodiments of the present application. The electronic device may be a server, a computer, a notebook computer, or a mobile phone terminal and other devices. In this embodiment, a server is used as an example of an electronic device. As shown in FIG. 14, the electronic device comprises:

a processor 291, memory 292; a communication interface 293, and a bus 294. The processor 291, the memory 292, and the communication interface 293 may communicate with each other through the bus 294. The communication interface 293 may be configured for information transfer. The processor 291 may call logical instructions in the memory 292 to perform the method in this embodiment.

In addition, the logic instructions in the memory 292 may be realized by software functional units and be stored in a computer-readable storage medium when sold or used as a stand-alone product.

The memory 292, as computer-readable storage medium, may be configured to store software programs, computer-executable programs, such as the program instructions/modules corresponding to the method in embodiments of the present application. The processor 291, by running software programs, instructions, and modules stored in the memory 292, performs functional applications and data processing, that is, implementing the method in the embodiments of the present application.

The memory 292 may include a storage program area and a storage data area, wherein the storage program area may store operating systems to one less function required application. The storage data area may store data generated according to the use of the terminal devices. In addition, the memory 292 may include DRAM, and may also include a non-volatile memory.

A computer-readable storage medium is provided in the embodiments of the present application. The computer-readable storage medium stores computer execution instructions, which are executed by the processor to implement the method provided in the embodiments of the present application.

After reading this description and practicing the disclosed disclosure herein, those skilled in the art may readily come up with more implementation methods for the embodiments of the present application. The embodiments of the present application are intended to cover any variation, application or adaptive changes of the embodiments of the present application. The variations, application or adaptive changes conform to the general principles of the embodiments of the present application and include common knowledge or conventional technical means in the technical field which are not disclosed in the embodiments of the present application. The description and examples are provided for illustrative purpose only, and the scope and spirit of the embodiments of the present application are indicated by the claims.

It should be understood that the embodiments of the present application are not limited to the precise structures described above and illustrated in the drawings, and modifications and changes may be made without departing from the scope thereof. The scope of the embodiments of the present application is limited only by the claims.

## Claims

1. A key-value storage method, wherein the method is applied to a Key value solid state drive that comprises a first memory chip and a second memory chip, the first memory chip is a storage-class memory (SCM) chip and the second memory chip is a flash memory chip, the method comprises:
receiving a write instruction including a first key and a first value;
querying whether the metadata contains the first key;
writing the first key into the first memory chip if there is no first key in the metadata; and
writing the first value to the second memory chip and updating the metadata.

2. The method according to claim 1, wherein writing the first value to the second memory chip, comprises:
selecting one out of the first memory chip and the second memory chip as a target memory chip according to the attributes of the first value to write the first value and update the metadata, wherein the attributes of the first value comprise at least one of the following: the length of the first value and the update frequency of the first value.

3. The method according to claim 2, wherein selecting one out of the first memory chip and the second memory chip as a target memory chip according to the attributes of the first value to write the first value, comprises:
selecting the first memory chip as the target memory chip to write the first value if the length of the first value is shorter than a preset threshold value; and
selecting the second memory chip as the target memory chip to write the first value if the length of the first value is greater than or equal to a preset threshold value.

4. The method according to claim 2, wherein selecting one out of the first memory chip and the second memory chip as a target memory chip according to the attributes of the first value to write the first value, comprises:
selecting the first memory chip as the target memory chip to write the first value if the update frequency of the first value is higher than or equal to a preset frequency; and
selecting the second memory chip as the target memory chip to write the first value if the update frequency of the first value is lower than a preset frequency.

5. The method according to claim 2, before selecting either of the first memory chip and the second memory chip as the target memory chip to write the first value and update the metadata according to the attributes of the first value, further comprises:
determining the storage space of the current value corresponding to the first key according to the metadata if the first key exists in the metadata; and
processing the storage space of the current value to invalidate the current value.

6. The method according to claim 5, wherein processing the storage space of the current value to invalidate the current value, comprises:
releasing the storage space of the current value to delete the current value if the current value is stored in the first memory chip, wherein the storage space for the current value that is released becomes writable; and
adding an invalid identifier to the storage space of the current value to invalidate the current value if the current value is stored in the second memory chip, wherein the storage space of the current value with an invalid identifier becomes writable.

7. The method according to claim 5 further comprising:
writing the first value into the first memory chip and overwriting the storage space of the current value with the storage space of the first value, if the current value is stored in the first memory chip and the length of the current value is greater than or equal to the length of the first value.

8. The method according to claim 2, further comprising:
receiving a delete instruction that includes the first key;
determining that the metadata contains the first key;
determining a storage space of the first value according to the storage location of the first value;
releasing the storage space of the first value if the first value is stored in the first memory chip;
marking the storage space of the first value as invalid if the first value is stored in the second memory chip;
releasing the storage space of the first key; and
updating the metadata.

9. The method according to claim 1, wherein the metadata is stored in the first memory chip and the solid state drive further comprises dynamic random access memory; and the storage method further comprises:
reading the metadata from the first memory chip and writing it into the dynamic random access memory for querying and updating the metadata after power-on.

10. A key-value storage system comprising a host and a Key value solid state drive that includes a controller, a first memory chip and a second memory chip, wherein the first memory chip is a storage-class memory (SCM) chip, the second memory chip is a flash memory chip, and the controller is used for:
connecting with the host to receive a write instruction from the host, wherein the write instruction comprises a first key and a first value;
querying whether the metadata contains the first key;
writing the first key to the first memory chip if the first key does not exist in the metadata; and
writing the first value to the second memory chip and update the metadata.
